# EUROPÄISCHE PATENTSCHRIFT

(11) **EP 2 028 572 B1**
(45) Veröffentlichungstag und Bekanntmachung des Hinweises auf die Patenterteilung: **14.04.2010**
(21) Anmeldenummer: 07016485.0
(22) Anmeldetag: 22.08.2007
(51) Int. Cl.: G05B 19/048

(54) **Betriebsverfahren für eine Steuereinrichtung einer sicherheitsgerichteten Automatisierungseinrichtung zum Überprüfen der Zuverlässigkeit eines Automatisierungssystems**
Operating method for a control device of a safety-oriented automation device for checking the reliability of an automation system
Procédé de fonctionnement d'un dispositif de commande d'un dispositif d'automatisation orienté vers la sécurité pour la vérification de la fiabilité d'un système d'automatisation

(43) Veröffentlichungstag der Anmeldung: 25.02.2009
(73) Patentinhaber: SIEMENS AKTIENGESELLSCHAFT, 80333 München (DE)
(72) Erfinder: Hahn, Ulrich, 91413 Neustadt/A. (DE); Schwesig, Günter, 91054 Erlangen (DE); Walders, Hanno, 91056 Erlangen (DE); Wanner, Dietmar, 91074 Herzogenaurach (DE)

(56) Entgegenhaltungen:
- GUO ET AL: "A simple reliability block diagram method for safety integrity verification" RELIABILITY ENGINEERING AND SYSTEM SAFETY, ELSEVIER APPLIED SCIENCE, GB, Bd. 92, Nr. 9, 6. März 2007 (2007-03-06), Seiten 1267-1273, XP005916447 ISSN: 0951-8320
- MARIANI R ET AL: "Using an innovative SoC-level FMEA methodology to design in compliance with IEC61508" 2007 10TH DESIGN, AUTOMATION AND TEST IN EUROPE CONFERENCE AND EXHIBITION (IEEE CAT NO. 07EX1635) IEEE PISCATAWAY, NJ, USA, 2007, Seite 6 pp., XP002486335 ISBN: 978-3-9810801-2-4

## Beschreibung

Betriebsverfahren für eine Steuereinrichtung einer sicherheitsgerichteten Automatisierungseinrichtung zum Überprüfen der Zuverlässigkeit eines Automatisierungssystems

Die vorliegende Erfindung betrifft ein Betriebsverfahren für eine Steuereinrichtung einer Automatisierungseinrichtung, wobei zumindest die Sicherheit und/oder Zuverlässigkeit der Steuereinrichtung bereits nachgewiesen ist.

Automatisierungseinrichtungen und Automatisierungssysteme sind allgemein bekannt. Sie werden in vielen Bereichen zur Steuerung technischer Prozesse und Anlagen eingesetzt. Beispiele für Automatisierungseinrichtungen und Automatisierungssysteme sind CNC-Steuerungen (CNC = computer numerically controlled), MC-Steuerungen (MC = motion control) und SPSen (SPS = speicherprogrammierbare Steuerung), mit Peripherieelementen.

In vielen Fällen führen die Automatisierungseinrichtungen und -systeme sicherheitsgerichtete Funktionen aus. In derartigen Fällen müssen die entsprechenden Einrichtungen und Systeme sicher sein.

Für den Nachweis der funktionalen Sicherheit derartiger Einrichtungen und Systeme ist die Berechnung der Gefährdungsrate (beispielsweise gemäß IEC 61508-6 Anhang B) notwendig. Grundlage für die Berechnungen sind Modellierungen bezüglich der funktionalen Sicherheit und die Berechnung dieser Modellierungen über iterative Verfahren, lineare Näherungen oder - bei sehr einfachen Modellierungen - durch geschlossene Lösungen.

Bei komplexen Geräten oder Systemen, die in verschiedenen Konfigurationen betreibbar sind, kann nicht nur ein einzelner Zahlenwert als Gefährdungsrate angegeben werden. Vielmehr ist die Gefährdungsrate separat für jede Konfiguration zu ermitteln. Der Aufwand und auch die mögliche Streuungsbreite der (korrekten) Gefährdungsraten steigt hierbei mit der Vielzahl von Komponenten und deren Kombinationsmöglichkeiten stark an.

Die ermittelten Werte sind Teil eines sicherheitstechnischen Systems. Sie sind damit auch Bestandteil der Zertifizierungsunterlagen, die zur Zertifizierung dieser Geräte bzw. Systeme bei einem entsprechenden zugelassenen Zertifizierungsinstitut vorgelegt werden.

Im Stand der Technik wird die Gefährdungsrate von einem Fachmann errechnet. In der Regel handelt es sich um dieselbe Person, die auch andere Teile der für die Zertifizierung erforderlichen Unterlagen erstellt. Die von dem Fachmann ermittelte Gefährdungsrate wird von der Zertifizierungsstelle geprüft. Dabei werden unter anderem die zu Grunde liegenden Modelle und deren Lösungswege (Gleichungen bzw. Algorithmen) geprüft.

Im Stand der Technik ist bei komplexen Systemen eine Vereinfachung erforderlich, um den Rechenaufwand in einem vernünftigen Rahmen zu halten. Die Vereinfachung besteht darin, dass mehrere Konfigurationen zusammengefasst werden und die gefährlichste hiervon betrachtet wird. Für die reduzierte Anzahl von möglichen Konfigurationen werden tabellarisch entsprechende Gefährdungswerte angegeben, damit der Anwender eine Konfiguration auswählen kann, die seinen Sicherheitsbedürfnissen entspricht. In vielen Fällen führt dies dazu, dass das Automatisierungssystem bzw. die Automatisierungseinrichtung, das bzw. die für eine bestimmte Automatisierungsaufgabe herangezogen wird, sicherer ist, als dies für die Automatisierungsaufgabe erforderlich wäre.

Die zu ermittelnde Gefährdungsrate ist eine sicherheitsrelevante Kenngröße. Aus diesem Grund sind auch die Algorithmen, Zahlenwerte usw., die der Ermittlung der Gefährdungsrate zu Grunde liegen, ihrerseits sicherheitsrelevant. Die Verwendung von allgemeinen Berechnungswerkzeugen (Mathematikprogrammen, Tabellenkalkulation usw.) ist daher kritisch, da an derartige Softwarewerkzeuge und die zugehörigen Hardwareplattformen sicherheitstechnische Anforderungen gestellt werden müssen, die entweder nicht erfüllt werden können oder nur mit äußerst kundenunfreundlichen Modifikationen erfüllt werden können.

In diesem Zusammenhang wird verwiesen auf den Artikel von GUO ET AL.: "A simple reliability block diagram method for safety integrity verification" in Reliability Engineering & System Safety, Elsevier Applied Science, GB, Bd. 92, Nr. 9, 6. März 2007, Seiten 1267-1273, XP005916447, ISSN: 0951-8320

Die Aufgabe der vorliegenden Erfindung besteht darin, Möglichkeiten zu schaffen, auf einfache Weise mit quantitativer Zuverlässigkeit Aussagen über die Zuverlässigkeit eines zu beurteilenden Automatisierungssystems treffen zu können.

Die Aufgabe wird durch ein Verfahren mit den Merkmalen des Anspruchs 1 gelöst. Vorteilhafte Ausgestaltungen sind Gegenstand der abhängigen Ansprüche 2 bis 10.

Erfindungsgemäß werden der Steuereinrichtung der Automatisierungseinrichtung Informationen vorgegeben, die ein Automatisierungssystem beschreiben. Die Informationen umfassen, welche Elemente das Automatisierungssystem enthält, wie die Elemente des Automatisierungssystems zusammenwirken und welche sicherheitsrelevante Zuverlässigkeitsinformationen den einzelnen Elemente des Automatisierungssystems zugeordnet sind. Die Steuereinrichtung ermittelt anhand der vorgegebenen Informationen selbsttätig eine Zuverlässigkeitsinformation für das Automatisierungssystem als Ganzes.

Zum Vorgeben der das Automatisierungssystem beschreibenden Informationen sind verschiedene Vorgehensweisen möglich, die nach Belieben und Bedarf miteinander kombiniert werden können. So ist es beispielsweise möglich, dass die Steuereinrichtung die Informationen zumindest teilweise aus einem internen Speicher der Steuereinrichtung ausliest. Ebenso können die Informationen der Steuereinrichtung zumindest teilweise von einem Benutzer der Steuereinrichtung vorgegeben werden. Weiterhin ist es möglich, die Informationen der Steuereinrichtung zumindest teilweise über eine Rechnernetzanbindung vorzugeben. Wenn das Automatisierungssystem mit der Automatisierungseinrichtung identisch ist, ist es weiterhin möglich, dass die Steuereinrichtung die Informationen zumindest teilweise selbsttätig ermittelt.

Es ist möglich, dass die Steuereinrichtung die ermittelte Zuverlässigkeitsinformation für das Automatisierungssystem als Ganzes intern weiterverarbeitet oder an eine andere Einrichtung (beispielsweise einen mit der Steuereinrichtung vernetzten Rechner) ausgibt. Vorzugsweise jedoch gibt die Steuereinrichtung die von ihr ermittelte Zuverlässigkeitsinformation über das Automatisierungssystem als Ganzes an einen Benutzer der Steuereinrichtung aus.

Vorzugsweise ermittelt die Steuereinrichtung mindestens zweikanalig unabhängig voneinander jeweils eine Zuverlässigkeitsinformation für das Automatisierungssystem als Ganzes. Die mindestens zweikanalig ermittelten Zuverlässigkeitsinformationen für das Automatisierungssystem als Ganzes vergleicht die Steuereinrichtung in diesem Fall miteinander und gibt das Vergleichsergebnis als solches an den Benutzer der Steuereinrichtung aus.

Die mindestens zweikanalige Ermittlung kann beispielsweise durch die Abarbeitung diversitärer Software erfolgen. Alternativ oder zusätzlich kann die Steuereinrichtung mindestens zwei Teilsteuereinrichtungen aufweisen. In diesem Fall kann jede der Teilsteuereinrichtungen unabhängig von den jeweils anderen Teilsteuereinrichtungen die jeweilige Zuverlässigkeitsinformation für das Automatisierungssystem als Ganzes ermitteln. Im letztgenannten Fall können die Teilsteuereinrichtungen insbesondere diversitär ausgebildet sein.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: beispielhaft den Aufbau einer Automatisie- rungseinrichtung,
- FIG 2 und 3: Ablaufdiagramme und
- FIG 4: einen möglichen Aufbau einer Steuereinrich- tung.

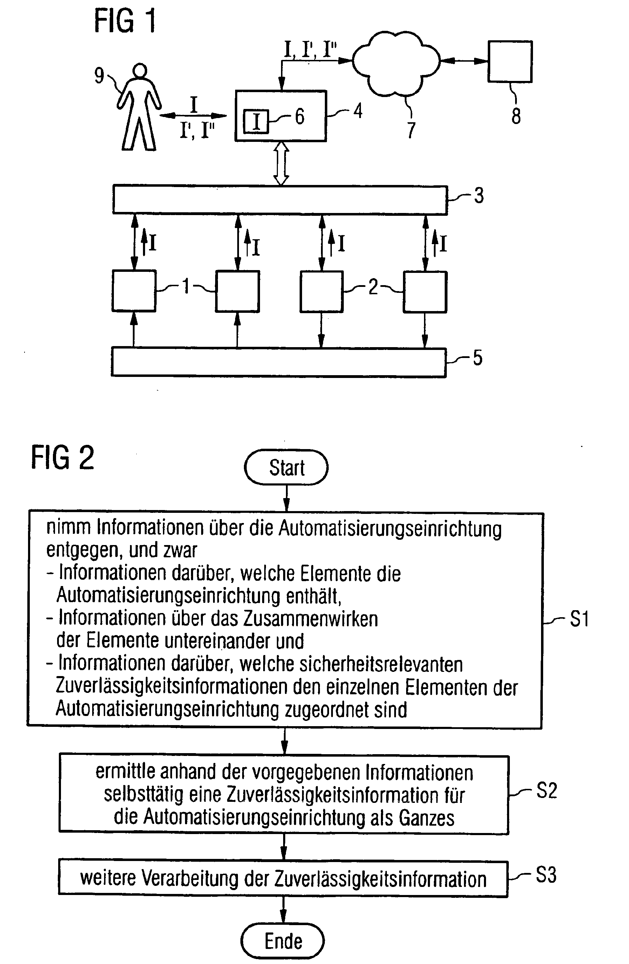

Gemäß FIG 1 weist eine Automatisierungseinrichtung verschiedene Elemente 1 bis 4 auf. Rein beispielhaft sind in FIG 1 zwei Eingabeelemente 1, zwei Ausgabeelemente 2, ein Verteilerelement 3 und eine Steuereinrichtung 4 dargestellt. Die Automatisierungseinrichtung könnte - je nach Bedarf - jedoch andere und/oder mehr oder weniger Elemente 1 bis 4 aufweisen, insbesondere erheblich mehr Elemente 1 bis 4.

Mittels der Automatisierungseinrichtung sollen unter anderem sicherheitsgerichtete Funktionen eines technischen Prozesses 5 überwacht und gesteuert werden. Es ist daher von Bedeutung, dass die Automatisierungseinrichtung Zuverlässigkeitsbedingungen genügt. Die Zuverlässigkeitsbedingungen sind hierbei in einschlägigen Normen geregelt. Sie können von der Art des technischen Prozesses 5 und der Art der sicherheitsgerichteten Funktionen abhängen.

Um zu prüfen, ob die Automatisierungseinrichtung als Ganzes den geforderten Zuverlässigkeitsbedingungen genügt, führt die Steuereinrichtung 4 der Automatisierungseinrichtung ein Verfahren aus, das nachfolgend in Verbindung mit FIG 2 näher erläutert wird.

Gemäß FIG 2 werden der Steuereinrichtung in einem Schritt S1 Informationen I vorgegeben, die die Automatisierungseinrichtung beschreiben. Die Informationen I umfassen hierbei, welche Elemente 1 bis 4 die Automatisierungseinrichtung enthält. Weiterhin umfassen die Informationen I, wie die Elemente 1 bis 4 der Automatisierungseinrichtung zusammenwirken, insbesondere die Topologie der Elemente 1 bis 4. Weiterhin umfassen die Informationen I, welche sicherheitsrelevanten Zuverlässigkeitsinformationen den einzelnen Elementen 1 bis 4 der Automatisierungseinrichtung zugeordnet sind.

Die Vorgabe der Informationen I kann nach Bedarf erfolgen. Beispielsweise können die Informationen I gemäß FIG 1 in einen internen Speicher 6 der Steuereinrichtung 4 gespeichert sein. In diesem Fall liest die Steuereinrichtung 4 die Informationen I aus dem internen Speicher 6 aus. Ebenso ist es möglich, dass die Informationen I der Steuereinrichtung 4 über eine Rechnernetzanbindung 7 (beispielsweise das Internet oder ein LAN) von einem Rechner 8 vorgegeben werden. Auch ist es möglich, dass die Informationen I der Steuereinrichtung 4 von einem Benutzer 9 der Steuereinrichtung 4 vorgegeben werden. Schließlich ist es möglich, dass die Steuereinrichtung 4 die Informationen I selbsttätig ermittelt. Beispielsweise kann die Steuereinrichtung 4 beim erstmaligen Hochlaufen automatisch die Konfiguration der Automatisierungseinrichtung ermitteln, aus den einzelnen Elementen 1 bis 4 jeweils die Informationen über das jeweiligen Element 1 bis 4 auslesen und sich so die Informationen I über die Automatisierungseinrichtung verschaffen.

Weiterhin sind beliebige Mischformen der oben genannten Vorgehensweisen möglich. Beispielsweise kann die Steuereinrichtung 4 zunächst den zuletzt beschriebenen Versuch einer Eigenermittlung der Informationen I vornehmen, sodann beim Benutzer 9 anfragen, ob die Informationen I vollständig sind, und sodann (falls erforderlich) eine Vervollständigung der Informationen I entgegen nehmen. Weiterhin ist es möglich, dass die Informationen I der Steuereinrichtung 4 redundant auf mindestens zwei verschiedene Arten vorgegeben werden, beispielsweise zum einen durch Eigenermittlung und zum anderen über die Rechnernetzanbindung 7. In diesem Fall ist eine Überprüfung der Informationen I auf Korrektheit und Konsistenz möglich.

In einem Schritt S2 ermittelt die Steuereinrichtung 4 anhand der vorgegebenen Informationen I selbsttätig eine Zuverlässigkeitsinformation I' für die Automatisierungseinrichtung als Ganzes. Sie ermittelt beispielsweise eine Kennzahl, welche angibt, wie groß die Gefährdungsrate nach IEC 61508-6 Anhang B ist. Es ist jedoch alternativ oder zusätzlich auch die Ermittlung anderer Werte möglich.

Die ermittelte Zuverlässigkeitsinformation I' für die Automatisierungseinrichtung als Ganzes verarbeitet die Steuereinrichtung 4 in einem Schritt S3 weiter. Beispielsweise kann die Steuereinrichtung 4 die Zuverlässigkeitsinformation I' im Rahmen des Schrittes S3 an den Benutzer 9 ausgeben.

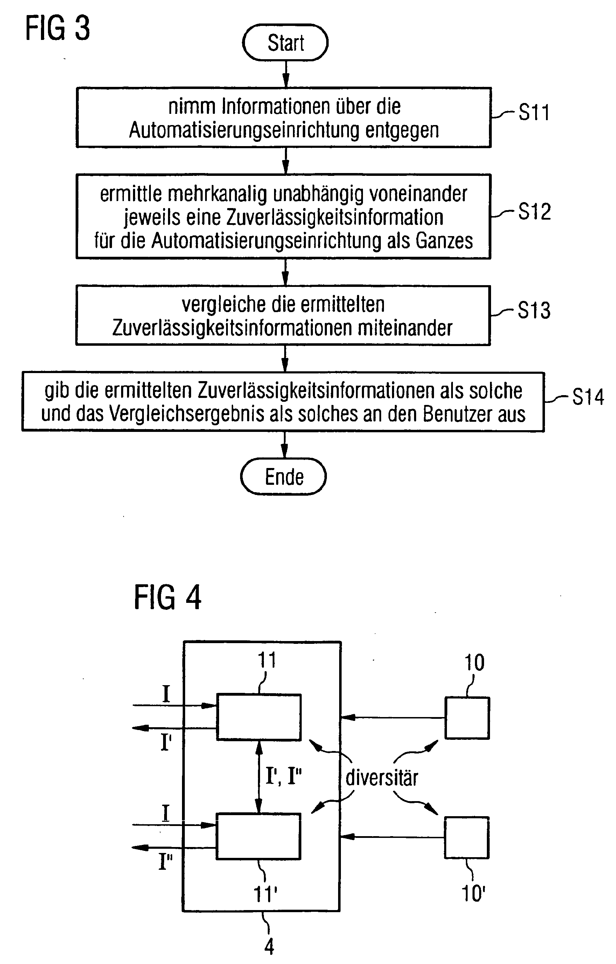

In vielen Fällen ermittelt die Steuereinrichtung 4 mindestens zweikanalig unabhängig voneinander jeweils eine Zuverlässigkeitsinformation I', I". Wenn dies der Fall ist, wird die Vorgehensweise von FIG 2 so abgewandelt, wie dies nachfolgend in Verbindung mit FIG 3 näher erläutert wird.

Gemäß FIG 3 werden der Steuereinrichtung 4 in einem Schritt S11 die Informationen I vorgegeben. Der Schritt S11 korrespondiert mit dem Schritt S1 von FIG 2.

In einem Schritt S12 ermittelt die Steuereinrichtung 4 mehrkanalig unabhängig voneinander jeweils eine Zuverlässigkeitsinformation I', I" für die Automatisierungseinrichtung als Ganzes. Der Schritt S12 entspricht im Wesentlichen einer mehrfachen, voneinander unabhängigen Ausführung des Schrittes S2.

In einem Schritt S13 vergleicht die Steuereinrichtung 4 die von ihr ermittelten Zuverlässigkeitsinformationen I', I" miteinander. In einem Schritt S14 gibt die Steuereinrichtung 4 zum einen die von ihr ermittelten Zuverlässigkeitsinformationen I', I" als solche und zum anderen das Vergleichsergebnis als solches an den Benutzer 9 aus.

Zur mindestens zweikanaligen Ermittlung der Zuverlässigkeitsinformation I', I" ist es möglich, dass die Steuereinrichtung 4 gemäß FIG 4 diversitäre Software 10, 10' abarbeitet. Pro Einheit der diversitären Software 10, 10' ermittelt die Steuereinrichtung 4 hierbei je einmal eine der Zuverlässigkeitsinformationen I', I". Weiterhin nimmt sie pro Einheit die Resultate der anderen Ermittlungen entgegen und führt den obenstehend erwähnten Vergleich durch.

Gemäß FIG 4 ist es möglich, dass die Steuereinrichtung 4 als einheitliche Steuereinrichtung 4 ausgebildet ist, welche die einzelnen Einheiten der diversitären Software 10, 10' abarbeitet. Vorzugsweise jedoch weist die Steuereinrichtung 4 mindestens zwei Teilsteuereinrichtungen 11, 11' auf. In diesem Fall ermittelt jede der Teilsteuereinrichtungen 11, 11' unabhängig von den jeweils anderen Teilsteuereinrichtungen 11', 11 eine jeweilige Zuverlässigkeitsinformation I', I" für die Automatisierungseinrichtung als Ganzes. Die zur Ermittlung der einzelnen Zuverlässigkeitsinformationen I', I" genützten Softwareeinheiten können hierbei alternativ diversitär oder nicht diversitär sein.

Gemäß FIG 4 sind die Teilsteuereinrichtungen 11, 11' diversitär ausgebildet. Dies ist jedoch nicht zwingend erforderlich. Alternativ könnten die Teilsteuereinrichtungen 11, 11' untereinander gleich ausgebildet sein.

Obenstehend wurde der Fall erläutert, dass Zuverlässigkeitsinformationen I', I" der Automatisierungseinrichtung ermittelt wurden, also genau des Automatisierungssystems, dessen Bestandteil die Steuereinrichtung 4 ist. Dies ist jedoch nicht zwingend erforderlich. Die Steuereinrichtung 4 könnte die Zuverlässigkeitsinformationen I', I" auch für ein Automatisierungssystem ermitteln, das von der Automatisierungseinrichtung verschieden ist. Der einzige relevante Unterschied zu den obenstehend erläuterten Vorgehensweisen besteht hierbei darin, dass in diesem Fall die Steuereinrichtung 4 die Informationen I, die das Automatisierungssystem beschreiben, nicht selbsttätig ermitteln kann.

Die Software zur Ermittlung der Zuverlässigkeitsinformationen I', I" kann Bestandteil der normalen Betriebssoftware der Steuereinrichtung 4 sein, also der Software, die zur Realisierung der eigentlichen Steuerungsaufgabe verwendet wird. Alternativ kann es sich um eine separate Software handeln.

Zusätzlich zu der Ermittlung der Zuverlässigkeitsinformation I', I" durch die Steuereinrichtung 4 kann - zeitlich vorher oder zeitlich nachher - mittels einer anderen Hard- und Software eine weitere Zuverlässigkeitsinformation ermittelt werden. Die weitere Hard- und Software kann beispielsweise PCbasierend ausgebildet sein. Die Sicherheit und/oder Zuverlässigkeit der weiteren Hard- und Software ist hierbei gegebenenfalls nachzuweisen.

Soweit im Rahmen der vorliegenden Erfindung mehrere Einzelergebnisse für die Zuverlässigkeitsinformation I', I" vorliegen, kann der Vergleich der Ergebnisse automatisch erfolgen. Alternativ ist es möglich, die einzelnen Ergebnisse an den Benutzer 9 auszugeben, so dass dieser den Vergleich vornehmen kann.

Die vorliegende Erfindung weist viele Vorteile auf. Insbesondere ist es beispielsweise nicht mehr erforderlich, mehrere Konfigurationen zusammenzufassen oder Linearisierungen vorzunehmen. Hieraus resultiert ein für jede Konfiguration exakter Zahlenwert für beispielsweise die Gefährdungsrate. Insbesondere bei komplexen Systemen kann sich dieser Vorteil nennenswert auswirken. Die Berechnung der Zuverlässigkeitsinformation I, I' für die Automatisierungseinrichtung, deren Bestandteil die Steuereinrichtung 4 ist, bietet darüber hinaus die Möglichkeit, die relevanten Informationen I, die das Automatisierungssystem beschreiben, selbsttätig zu ermitteln. Weiterhin wird der Dokumentationsaufwand für den Kunden reduziert.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für eine Steuereinrichtung (4) einer sicherheitsgerichteten Automatisierungseinrichtung,
- wobei der Steuereinrichtung (4) Informationen (I) vorgegeben werden, die ein Automatisierungssystem beschreiben,
- wobei die Informationen (I) umfassen, welche Elemente (1 bis 4) das Automatisierungssystem enthält, wie die Elemente (1 bis 4) des Automatisierungssystems zusammenwirken und welche sicherheitsrelevante Zuverlässigkeitsinformationen den einzelnen Elementen (1 bis 4) des Automatisierungssystems zugeordnet sind,
- wobei die Steuereinrichtung (4) anhand der vorgegebenen Informationen (I) selbsttätig eine Zuverlässigkeitsinformation (I',I") für das Automatisierungssystem als Ganzes ermittelt.

2. Betriebsverfahren nach Anspruch 1, **dadurch gekennzeichnet, dass** die Steuereinrichtung (4) die Informationen (I), die das Automatisierungssystem beschreiben, zumindest teilweise aus einem internen Speicher (6) der Steuereinrichtung (4) ausliest.

3. Betriebsverfahren nach Anspruch 1 oder 2, **dadurch gekennzeichnet, dass** die Informationen (I), die das Automatisierungssystem beschreiben, der Steuereinrichtung (4) zumindest teilweise von einem Benutzer (9) der Steuereinrichtung (4) vorgegeben werden.

4. Betriebsverfahren nach Anspruch 1, 2 oder 3, **dadurch gekennzeichnet, dass** die Informationen (I), die das Automatisierungssystem beschreiben, der Steuereinrichtung (4) zumindest teilweise über eine Rechnernetzanbindung (7) vorgegeben werden.

5. Betriebsverfahren nach einem der obigen Ansprüche,
**dadurch gekennzeichnet, dass** das Automatisierungssystem mit der Automatisierungseinrichtung identisch ist und dass die Steuereinrichtung (4) die Informationen (I), die das Automatisierungssystem beschreiben, zumindest teilweise selbsttätig ermittelt.

6. Betriebsverfahren nach einem der obigen Ansprüche,
**dadurch gekennzeichnet, dass** die Steuereinrichtung (4) die von ihr ermittelte Zuverlässigkeitsinformation (I',I") für das Automatisierungssystem als Ganzes an einen Benutzer (9) der Steuereinrichtung (4) ausgibt.

7. Betriebsverfahren nach einem der obigen Ansprüche,
**dadurch gekennzeichnet, dass** die Steuereinrichtung (4) mindestens zweikanalig unabhängig voneinander jeweils eine Zuverlässigkeitsinformation (I',I") für das Automatisierungssystem als Ganzes ermittelt, die mindestens zweikanalig ermittelten Zuverlässigkeitsformationen (I', I") miteinander vergleicht und das Vergleichsergebnis als solches an einen Benutzer (9) der Steuereinrichtung (4) ausgibt.

8. Betriebsverfahren nach Anspruch 7, **dadurch gekennzeichnet, dass** die mindestens zweikanalige Ermittlung der Zuverlässigkeitsinformationen (I',I") durch die Abarbeitung diversitärer Software (10,10') erfolgt.

9. Betriebsverfahren nach Anspruch 7 oder 8, **dadurch gekennzeichnet, dass** die Steuereinrichtung (4) mindestens zwei Teilsteuereinrichtungen (11,11') aufweist und dass jede der Teilsteuereinrichtungen (11,11') unabhängig von der jeweils anderen Teilsteuereinrichtungen (11',11) die jeweilige Zuverlässigkeitsinformation (I',I") für das Automatisierungssystem als Ganzes ermittelt.

10. Betriebsverfahren nach Anspruch 9, **dadurch gekennzeichnet, dass** die Teilsteuereinrichtungen (11,11') diversitär ausgebildet sind.

## Claims

1. Operating method for a control device (4) of a safety-oriented automation device,
- wherein information (I) which describes an automation system is input into the control device (4),
- wherein the information (I) comprises what elements (1 to 4) are contained in the automation system, how the elements (1 to 4) of the automation system interact and what safety-related reliability information is allocated to the individual elements (1 to 4) of the automation system,
- wherein the control device (4) independently determines by means of the information (I) input a reliability information item (I', I") for the automation system as a whole.

2. Operating method according to Claim 1, **characterized in that** the control device (4) reads the information (I) which describes the automation system at least partially out of an internal memory (6) of the control device (4).

3. Operating method according to Claim 1 or 2, **characterized in that** the information (I) which describes the automation system is input into the control device (4) at least partially by a user (9) of the control device (4).

4. Operating method according to Claim 1, 2 or 3, **characterized in that** the information (I) which describes the automation system is input into the control device (4) at least partially via a computer network link (7).

5. Operating method according to one of the above claims, **characterized in that** the automation system is identical with the automation device and that the control device (4) determines the information (I) which describes the automation system at least partially independently.

6. Operating method according to one of the above claims, **characterized in that** the control device (4) outputs the reliability information (I', I"), determined by it, for the automation system as a whole to a user (9) of the control device (4).

7. Operating method according to one of the above claims, **characterized in that** the control device (4) determines over at least two channels independently of one another in each case one reliability information item (I', I") for the automation system as a whole, compares with one another the reliability information (I', I") determined over at least two channels and outputs the result of the comparison as such to a user (9) of the control device (4).

8. Operating method according to Claim 7, **characterized in that** the determination of the reliability information (I', I") over at least two channels takes place by the processing of diversitary software (10, 10').

9. Operating method according to Claim 7 or 8, **characterized in that** the control device (4) has at least two part-control devices (11, 11') and that each of the part-control devices (11, 11') determines the respective reliability information (I', I") for the automation system as a whole independently of the in each case other part-control devices (11', 11).

10. Operating method according to Claim 9, **characterized in that** the part-control devices (11, 11') are constructed to be diversitary.

## Revendications

1. Procédé pour faire fonctionner un dispositif ( 4 ) de commande d'un dispositif d'automatisation de sécurité,
- dans lequel le dispositif ( 4 ) de commande prescrit des informations ( I ), qui décrivent un système d'automatisation,
- dans lequel les informations ( I ) comprennent les éléments ( 1 à 4 ) que le système d'automatisation contient, comment les éléments ( 1 à 4 ) du système d'automatisation coopèrent et les informations de fiabilité pertinentes pour la sécurité qui sont affectées aux divers éléments ( 1 à 4 ) du système d'automatisation,
- dans lequel le dispositif ( 4 ) de commande détermine, pour le système d'automatisation en son entier, automatiquement une information ( I', I" ) de fiabilité au moyen des informations ( I ) prescrites.

2. Procédé suivant la revendication 1, **caractérisé en ce que** le dispositif ( 4 ) de commande fournit des informations ( I ), qui décrivent le système d'automatisation au moins en partie à partir d'une mémoire ( 6 ) interne du dispositif ( 4 ) de commande.

3. Procédé suivant la revendication 1 ou 2, **caractérisé en ce que** les informations ( I ), qui décrivent le système d'automatisation, sont prescrites au dispositif ( 4 ) de commande au moins en partie par un utilisateur ( 9 ) du dispositif ( 4 ) de commande.

4. Procédé suivant la revendication 1, 2 ou 3, **caractérisé en ce que** les informations ( I ), qui décrivent le système d'automatisation, sont prescrites au dispositif ( 4 ) de commande au moins en partie par une liaison ( 7 ) d'un réseau d'ordinateur.

5. Procédé suivant l'une des revendications précédentes, **caractérisé en ce que** le système d'automatisation est identique au dispositif d'automatisation et **en ce que** le dispositif ( 4 ) de commande détermine au moins en partie automatiquement les informations ( I ), qui décrivent le système d'automatisation.

6. Procédé suivant l'une des revendications précédentes, **caractérisé en ce que** le dispositif ( 4 ) de commande émet, vers un utilisateur ( 9 ) du dispositif ( 4 ) de commande, des informations ( I', I" ) de fiabilité qu'il a déterminé pour le système d'automatisation en son entier.

7. Procédé suivant l'une des revendications précédentes, **caractérisé en ce que** le dispositif ( 4 ) de commande détermine respectivement une information ( I', I" ) de fiabilité pour le système d'automatisation en son entier par au moins deux canaux indépendants l'un de l'autre, compare les informations ( I', I" ) de fiabilité déterminées par au moins deux canaux et envoie le résultat de la comparaison en tant que tel à un utilisateur ( 9 ) du dispositif ( 4 ) de commande.

8. Procédé suivant la revendication 7, **caractérisé en ce que** la détermination par au moins deux canaux des informations ( I', I" ) de fiabilité s'effectue par l'élaboration de logiciels ( 10, 10' ) divers.

9. Procédé suivant la revendication 7 ou 8, **caractérisé en ce que** le dispositif ( 4 ) de commande a au moins deux sous-dispositifs ( 11, 11' ) de commande et **en ce que** chacun des sous-dispositifs ( 11, 11' ) de commande détermine, indépendamment de l'autre sous-dispositif ( 11, 11' ) de commande, l'information ( I', I" ) de fiabilité respective pour le système d'automatisation en son entier.

10. Procédé suivant la revendication 9, **caractérisé en ce que** les sous-dispositifs ( 11, 11' ) de commande sont constitués de manière diverse.
